# EUROPÄISCHE PATENTSCHRIFT

(11) **EP 3 784 976 B1**
(45) Veröffentlichungstag und Bekanntmachung des Hinweises auf die Patenterteilung: **06.05.2026**
(21) Anmeldenummer: 19712713.7
(22) Anmeldetag: 14.03.2019
(51) Int. Cl.: F41A 3/66, F41C 23/18

(54) **GEHÄUSE**
HOUSING
BOÎTIER

(30) Priorität: 27.04.2018 DE 202018102366 U
(43) Veröffentlichungstag der Anmeldung: 03.03.2021
(73) Patentinhaber: Rheinmetall Waffe Munition GmbH, 29345 Südheide (DE)
(72) Erfinder: BLACHE, Andreas, 29345 Unterlüß (DE); SCHMEES, Heiner, 29345 Unterlüß (DE)
(74) Vertreter: DREISS Patentanwälte PartG mbB
(86) Internationale Anmeldenummer: PCT/EP2019/056405
(87) Internationale Veröffentlichungsnummer: WO 2019/206514

(56) Entgegenhaltungen:
- DE-A1- 102013 003 435
- GB-A- 2 410 787
- US-A1- 2008 216 375
- US-A1- 2014 331 535

## Beschreibung

Die Erfindung beschäftigt sich mit einem Waffengehäuse für insbesondere Maschinengewehre. Die Erfindung bezieht sich insbesondere auf ein Verfahren zur Realisierung des Waffengehäuses.

Waffengehäuse für Maschinengewehre, wie beispielsweise für das MG3, werden in der Praxis durch ein Biege-/ Prägeverfahren aus einem Blech als Halbzeug hergestellt. Dazu wurde die Grundform aus dem Blech geschnitten. Dem schlossen sich das Biegen mit Zwischenglühen etc. an, um die beim Biegen erzeugten Spannungen wieder herauszunehmen. Das Kurvenstück wurden dann mit dem Blech vernietet, das Blechgehäuse verschweißt und die Führungsschienen/Führungsleisten eines Verschlussträgers vernietet. Nachteilig ist, dass die Herstellung dieser Gehäuse auch aus Materialgründen nur noch bedingt machbar ist. Zudem wird das Biege-/ Prägeverfahren nur noch von wenigen Herstellern durchgeführt. Die erforderlichen Vorrichtungen verschleißen und deren Wiederbeschaffung ist zeit- und kostenintensiv.

Die Erfindung stellt sich daher die Aufgabe, ein Verfahren aufzuzeigen, das zur Herstellung eines Waffengehäuses herangezogen werden kann.

Die Aufgabe wird erfindungsgemäß gelöst durch ein Verfahren mit den Merkmalen des Anspruchs 1 und ein Waffengehäuse mit den Merkmalen des Anspruchs 3.

Der Lösung liegt die Idee zugrunde, das Gehäuse aus einem Vollmaterial, einem Stahlklotz, spanabhebend zu bearbeiten. Dabei ergibt sich die Möglichkeit, den Werkstoff zu ändern, neue Werkstoffe zu verwenden, die beispielsweise ein Fräsen als spanabhebende Bearbeitung aus einem Materialblock ermöglichen. Diese Möglichkeit ergibt sich, da eine Umformbarkeit nicht mehr in dem Maße notwendig ist, wie es bei der bisherigen Biege-/ Prägefertigung notwendig ist.

Nach der neuen Herstellungsmethode können u.a. folgende Materialien verwendetwerden:
- C35(E) (Kohlenstoff 35%, Elektroverschmolzen) im Zustand normalgeglüht;
- C35 (E) im Zustand vergütet;
- C40 (E) im Zustand normalgeglüht.

Bei kleinen konstruktiven Änderungen, die eine direkte Härtung des Waffengehäuses nicht erforderlich machen, sind nachfolgende Werkstoffgruppen ebenfalls denkbar:
- klassische unlegierte Baustähle, z.B. S355;
- mikrolegierte Baustähle,
- Titanlegierungen, Z.B. TiAl6V4.

Das Fräsen von Kleinteilen einer Waffe offenbaren beispielsweise die DE 199 53 365 A1, DE 10 2004 021 952 B3 oder die DE 10 2012 019 422 B3. Einen Hinweis, dieses Verfahren auch für ein Waffengehäuse selbst zu verwenden, findet sich in diesen Schriften nicht. US 2014/0331535 A1 offenbart und lehrt, ein unteres Receiver-Gehäuse zur Aufnahme eines Munitionsmagazins aus einem linken Halbschalenteil und einem rechten Halbschalenteil mit einer vertikalen Trennebene zwischen den gegeneinander anliegenden Halbschalenteilen auszubilden, wobei die Teile dann lösbar miteinander verbunden werden sollen. Es wird eine Mehrzahl von Fertigungs- und Bearbeitungsmöglichkeiten der Halbschalenteile angesprochen, wie eine spanende Bearbeitung, Gießen, Schmieden, 3D-Druck und Spritzgießen. US 2008/0216375 A1 offenbart ein Waffengehäuse, welches ebenfalls aus einem linken und einem rechten Halbschalenteil mit vertikaler Trennebene dazwischen ausgebildet ist; eine Ausbildung mit Unterschale und Oberschale wäre hingegen aufgrund der Geometrie nicht möglich. GB 2410787 A offenbart ein zweiteiliges Waffengehäuse.

Das erfindungsgemäße Waffengehäuse besteht im Ergebnis der Herstellung aus einem dünnwandigen Hohlkörper mit diversen Öffnungen und Durchbrüchen. Für eine spanabhebende Herstellung der Innenkontur ist daher vorgesehen, dass das Waffengehäuse bevorzugt aus zwei Halbschalen besteht, deren jeweilige Innenkontur separat geschaffen wird. Zur Fertigungsvereinfachung können diese Halbschalen in weitere Einzelteile unterteilt werden. Diese Einzel- oder Mehrschalen werden zum Schluss miteinander verschweißt.

Eine Herausforderung stellt das Fräsen der Gehäuseteile bei den geringen Gehäusewandstärken dar. Hierzu sind Vorrichtungen erforderlich, die die Gehäuseteile bei der Innenbearbeitung von außen und bei der Außenbearbeitung von innen möglichst großflächig abstützen.

Der Vorteil dieser Lösung liegt u.a. darin, dass Standard-Werkzeugmaschinen verwendet werden können. Bei entsprechendem Ausgangmaterial ist eine nahezu verzugsfreie Fertigung möglich. Unterschiedliche Festigkeiten des Materials führen nicht mehr zu unterschiedlichem Rückbiegen. Eine Anpassung von Werkzeugen ist nicht mehr notwendig. Eine Fertigung in geringen Stückzahlen ist auch unter wirtschaftlichen Gesichtspunkten machbar. Insbesondere auch für kleine und mittlere Losgrößen ist eine wirtschaftliche Herstellung gegeben.

Anhand eines skizzenhaften Ausführungsbeispiels mit Zeichnung soll die Lösung näher erläutert werden. Eszeigt:
- Fig. 1: ein Waffengehäuse, bestehend aus einer Ober- und einer Unterschale,
- Fig. 2: eine weitere Unterteilung der Ober- und Unterschale in mehrere Einzelteile.

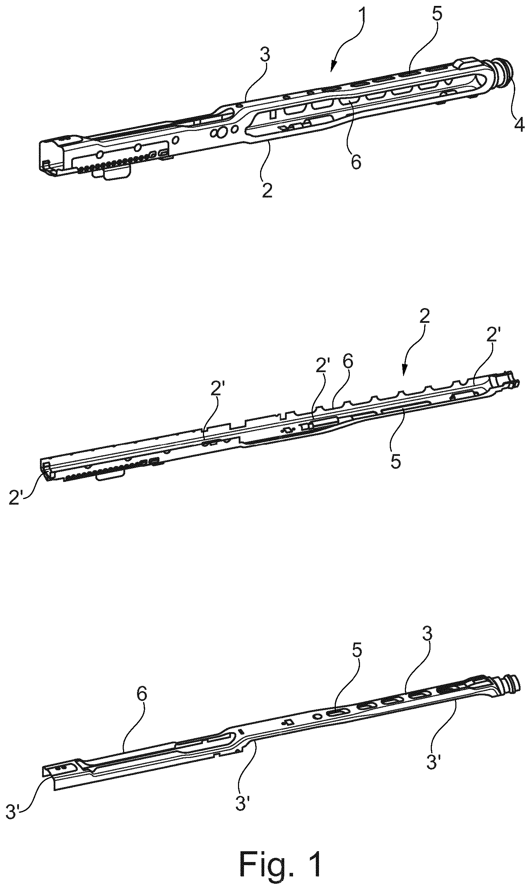

In Fig. 1 ist mit 1 ein Waffengehäuse einer nicht näher dargestellten Maschinenwaffe bzw. Maschinengewehrs gekennzeichnet. Das Waffengehäuse 1 ist bevorzugt zweiteilig und weist eine Unterschale 2 sowie eine überschlage 3 als Unterbaugruppen des Waffengehäuses 1 auf. In der Unterschale 2 und in der Oberschale 3 sind Öffnungen 5 bzw. Ausnehmungen 6 enthalten. Vorderseitig wird durch die beiden Schalen 2, 3 eine Rohrabstützung 4 des nicht näher dargestellten Waffenrohres gebildet.

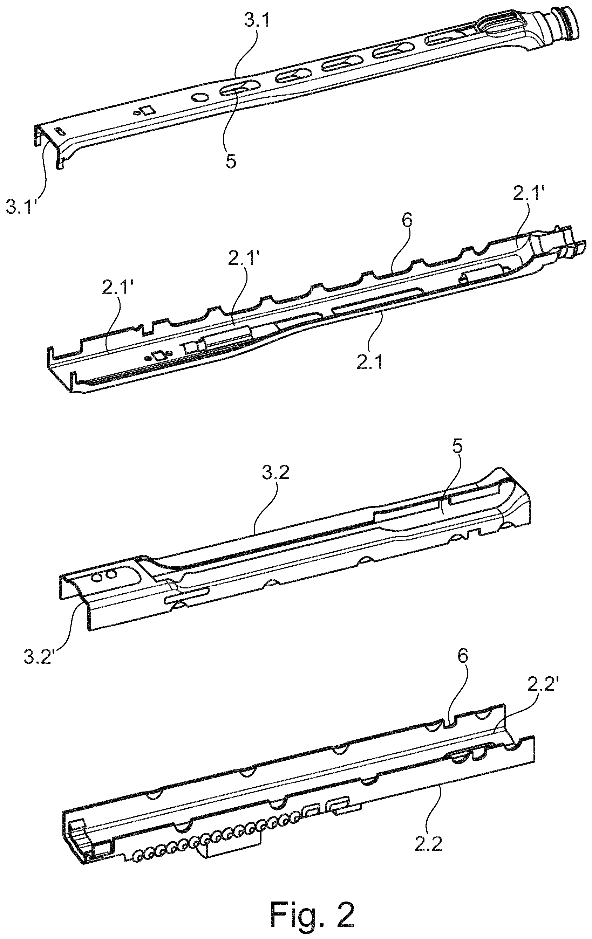

Fig. 2 zeigt die Unterschale 2 und die Oberschale 3 aus Fig. 1, die in zwei weitere Unterbaugruppen 2.1, 2.2 bzw. 3.1, 3.2 aufgeteilt worden sind. Diese Unterbaugruppen 2.1, 2.2, 3.1, 3.2 können weiter herunter gebrochen werden, um eine Vereinfachung in der Fertigung zu erreichen.

Die Herstellung des Waffengehäuses 1 erfolgt wie folgt:
Es wird ein Stahlklotz (nicht näher dargestellt) verwendet, der der Größe der jeweiligen Unterbaugruppe 2, 3, 2.1, 2.2, 3.1, 3.2 entspricht. Bevorzugt sollte der Stahlklotz zumindest in der Länge entsprechen. In diesen Stahlkatz werden eine Innenkontur 2', 3', 2.1', 2.2', 3.1', 3.2' sowie die Öffnungen 5 und Ausnehmungen 6 bevorzugt gefräst (ein- bzw. ausgefräst). Die Dicke bzw. Stärke der Gehäusewand liegt bevorzugt, jedoch nicht einschränkend, bei ca. 2,5 mm.

Die Unterbaugruppen 2, 3, bzw. die Unterbaugruppen 2.1, 2.2 und 3.1, 3.2 werden dann miteinander verbunden, bevorzugt verschweißt, um das Waffengehäuse 1 zu bilden.

Es versteht sich, dass die Innenkonturen 2', 3', 2.1', 2.2', 3.1', 3.2 auch notwendige Führungsschienen etc. beinhalten. Diese können aber auch als separate Bauteile nachträglich in das Waffengehäuse eingebracht, beispielsweise durch Nieten oder Schweißen.

Wie bereits ausgeführt, kann der Stahlklotz aus einem Material wie C35(E) im Zustand normalgeglüht, C35 (E) im Zustand vergütet oder C40 (E) im Zustand normalgeglüht bestehen. Alternativen sind bekannt.

## Patentansprüche

1. Verfahren zur Herstellung eines Waffengehäuses (1), wobei das Waffengehäuse aus wenigstens zwei Unterbaugruppen (2, 3, 2.1, 2.2, 3.1, 3.2) besteht, die eine Unterschale (2) und eine Oberschale (3) des Waffengehäuses bilden,
wobei durch die beiden Schalen, also durch die Unterschale (2) und durch die Oberschale (3), vorderseitig eine Rohrabstützung (4) für ein Waffenrohr gebildet wird,
wobei in einem jeweiligen Massivklotz für jede Unterbaugruppe (2, 3, 2.1, 2.2, 3.1, 3.2), eine Innenkontur (2', 3', 2.1', 2.2', 3.1', 3.2') spanabhebend eingebracht wird,
wobei in die wenigstens zwei Unterbaugruppen (2, 3, 2.1, 2.2, 3.1, 3.2) Öffnungen (5) und Ausnehmungen (6) spanabhebend eingebracht werden,
wobei die spanabhebende Bearbeitung eine fräsende Bearbeitung ist und
wobei die Unterbaugruppen (2, 3, 2.1, 2.2, 3.1, 3.2) dann miteinander durch Schweißen verbunden werden, um das Waffengehäuse zu bilden.

2. Verfahren nach Anspruch 1, **dadurch gekennzeichnet, dass** der Massivklotz ein Stahlklotz ist.

3. Waffengehäuse (1) bestehend aus wenigstens zwei Unterbaugruppen (2, 3, 2.1, 2.2, 3.1, 3.2),
die eine Unterschale (2) und eine Oberschale (3) des Waffengehäuses (1) bilden,
wobei durch die beiden Schalen, also durch die Unterschale (2) und durch die Oberschale (3), vorderseitig eine Rohrabstützung (4) für ein Waffenrohr gebildet ist,
wobei zumindest in einem jeweiligen Massivklotz für jede Unterbaugruppe (2, 3, 2.1, 2.2, 3.1, 3.2), eine Innenkontur (2', 3', 2.1', 2.2', 3.1', 3.2') spanabhebend eingebracht ist, und wobei in die wenigstens zwei Unterbaugruppen (2, 3, 2.1, 2.2, 3.1, 3.2) Öffnungen (5) und Ausnehmungen (6) spanabhebend eingebracht sind, und wobei die spanabhebende Bearbeitung Fräsen ist,
wobei die Unterbaugruppen (2, 3, 2.1, 2.2, 3.1, 3.2) dann miteinander durch Schweißen verbunden sind, um das Waffengehäuse zu bilden.

4. Waffengehäuse (1) nach Anspruch 3, **dadurch gekennzeichnet, dass** der Massivklotz ein Stahlklotz ist.

5. Waffengehäuse (1) nach Anspruch 3 oder 4, **dadurch gekennzeichnet, dass** das Waffengehäuse aus mehr als zwei Unterbaugruppen (2, 3, 2.1, 2.2, 3.1, 3.2) besteht

6. Waffengehäuse (1) nach Anspruch 3, 4 oder 5, **dadurch gekennzeichnet, dass** das Material ein C35(E) im Zustand normalgeglüht, ein C35(E) im Zustand vergütet, ein C40(E) im Zustand normalgeglüht ist.

## Claims

1. Method for manufacturing a weapon housing (1), wherein the weapon housing consists of at least two subassemblies (2, 3, 2.1, 2.2, 3.1, 3.2) which form a lower casing (2) and an upper casing (3) of the weapon housing,
wherein the two casings, namely the lower casing (2) and the upper casing (3), form, at the front, a barrel support (4) for a weapon barrel,
wherein an inner contour (2', 3', 2.1', 2.2', 3.1', 3.2') is machined in one solid block for each of the respective subassemblies (2, 3, 2.1, 2.2, 3.1, 3.2),
wherein openings (5) and recesses (6) are machined into the at least two subassemblies (2, 3, 2.1, 2.2, 3.1, 3.2),
wherein the machining process is a milling process and
wherein the subassemblies (2, 3, 2.1, 2.2, 3.1, 3.2) are then joined together by welding to form the weapon housing.

2. Method according to claim 1, **characterized in that** the solid block is a steel block.

3. Weapon housing (1) consisting of at least two subassemblies (2, 3, 2.1, 2.2, 3.1, 3.2) which form a lower casing (2) and an upper casing (3) of the weapon housing (1),
wherein a barrel support (4) for a weapon barrel is formed at the front by the two casings, namely the lower casing (2) and the upper casing (3),
wherein an inner contour (2', 3', 2.1', 2.2', 3.1', 3.2') is machined at least in one solid block for each of the respective subassemblies (2, 3, 2.1, 2.2, 3.1, 3.2), and wherein openings (5) and recesses (6) are machined into the at least two subassemblies (2, 3, 2.1, 2.2, 3.1, 3.2), and wherein the machining process is milling,
wherein the subassemblies (2, 3, 2.1, 2.2, 3.1, 3.2) are then joined together by welding to form the weapon housing.

4. Weapon housing (1) according to claim 3, **characterized in that** the solid block is a steel block.

5. Weapon housing (1) according to claim 3 or 4, **characterized in that** the weapon housing consists of more than two subassemblies (2, 3, 2.1, 2.2, 3.1, 3.2).

6. Weapon housing (1) according to claim 3, 4 or 5, **characterized in that** the material is C35(E) in the normalized state, C35(E) in the tempered state, or C40(E) in the normalized state.

## Revendications

1. Procédé de fabrication d'un boîtier d'arme (1), le boîtier d'arme étant constitué d'au moins deux sous-ensembles (2, 3, 2.1, 2.2, 3.1, 3.2) formant une coque inférieure (2) et une coque supérieure (3) du boîtier d'arme,
où, par les deux coques, c'est-à-dire par la coque inférieure (2) et par la coque supérieure (3), un support de canon (4) pour un canon est formé à l'avant,
où, dans un bloc massif respectif pour chaque sous-ensemble (2, 3, 2.1, 2.2, 3.1, 3.2), un contour intérieur (2', 3', 2.1', 2.2', 3.1', 3.2') est réalisé par enlèvement de matière,
où, dans les au moins deux sous-ensembles (2, 3, 2.1, 2.2, 3.1, 3.2), des ouvertures (5) et des découpes (6) sont réalisées par enlèvement de matière,
où l'enlèvement de matière est un fraisage et
où les sous-ensembles (2, 3, 2.1, 2.2, 3.1, 3.2) sont ensuite assemblés par soudage pour former le boîtier d'arme.

2. Procédé selon la revendication 1, **caractérisé en ce que** le bloc massif est un bloc en acier.

3. Boîtier d'arme (1) constitué d'au moins deux sous-ensembles (2, 3, 2.1, 2.2, 3.1, 3.2), formant une coque inférieure (2) et une coque supérieure (3) du boîtier d'arme (1),
où, par les deux coques, c'est-à-dire par la coque inférieure (2) et par la coque supérieure (3), un support de canon (4) pour un canon est formé à l'avant,
où au moins dans un bloc massif respectif pour chaque sous-ensemble (2, 3, 2.1, 2.2, 3.1, 3.2), un contour intérieur (2', 3', 2.1', 2.2', 3.1', 3.2') est réalisé par enlèvement de matière, et où, dans les au moins deux sous-ensembles (2, 3, 2.1, 2.2, 3.1, 3.2), des ouvertures (5) et des découpes (6) sont réalisées par enlèvement de matière, et où l'enlèvement de matière est un fraisage,
où les sous-ensembles (2, 3, 2.1, 2.2, 3.1, 3.2) sont ensuite assemblés par soudage pour former le boîtier d'arme.

4. Boîtier d'arme (1) selon la revendication 3, **caractérisé en ce que** le bloc massif est un bloc en acier.

5. Boîtier d'arme (1) selon la revendication 3 ou 4, **caractérisé en ce que** le boîtier d'arme est constitué de plus de deux sous-ensembles (2, 3, 2.1, 2.2, 3.1, 3.2)

6. Boîtier d'arme (1) selon la revendication 3, 4 ou 5, **caractérisé en ce que** le matériau est un C35(E) à l'état normalisé, un C35(E) à l'état trempé et revenu, un C40(E) à l'état normalisé.
